# EUROPÄISCHE PATENTSCHRIFT

(11) **EP 3 678 828 B1**
(45) Veröffentlichungstag und Bekanntmachung des Hinweises auf die Patenterteilung: **19.07.2023**
(21) Anmeldenummer: 18759629.1
(22) Anmeldetag: 27.08.2018
(51) Int. Cl.: B29C 45/00, F04D 29/32, F04D 29/02, B29L 31/08

(54) **SPRITZGUSSVERFAHREN ZUM HERSTELLEN EINES LÜFTERS MIT VERBESSERTER BINDENAHTFESTIGKEIT**
INJECTION MOULDING PROCESS FOR PRODUCING A FAN WITH IMPROVED WELD LINE STRENGTH
PROCÉDÉ DE MOULAGE PAR INJECTION POUR LA FABRICATION D'UN VENTILATEUR PRÉSENTANT UNE RÉSISTANCE AMÉLIORÉE DES JOINTS

(30) Priorität: 05.09.2017 DE 102017215570
(43) Veröffentlichungstag der Anmeldung: 15.07.2020
(73) Patentinhaber: Robert Bosch GmbH, 70442 Stuttgart (DE)
(72) Erfinder: BRANDES, Joerg, 76534 Baden-Baden (DE); FUERST, Thomas, 77886 Lauf (DE); STAIER, Thilo, 77654 Offenburg (DE); LIEDEL, Markus, 91257 Pegnitz (DE)
(86) Internationale Anmeldenummer: PCT/EP2018/072981
(87) Internationale Veröffentlichungsnummer: WO 2019/048273

(56) Entgegenhaltungen:
- EP-A1- 3 098 049
- DE-U1-202005 021 041
- JP-A- H0 857 904
- JP-A- H07 144 340
- JP-A- 2008 240 565
- JP-A- 2008 240 566
- JP-A- 2013 082 230
- KR-A- 20150 020 783
- US-A1- 2005 123 712
- US-A1- 2005 238 486

## Beschreibung

Die Erfindung betrifft ein Spritzgussverfahren zum Herstellen mindestens eines Lüfters mit einer Lüfternabe und mit einem über mindestens zwei Lüfterblätter mit der Lüfternabe verbundenen Lüfterband.

### Stand der Technik

Im Bereich der Motorkühlung von Fahrzeugen sind elektrisch angetriebene Laufräder bzw. Lüfter mit einem umlaufenden Lüfterband etabliert. Durch das umlaufende Lüfterband kann ein Geräuschpegel reduziert und der Wirkungsgrad des Lüfters erhöht werden. Derartige Lüfter werden üblicherweise spritzgegossen und bestehen aus faserverstärkten Werkstoffen. Üblicherweise sind die Werkstoffe Thermoplaste. Im Rahmen einer Herstellung der Lüfter wird durch im Bereich einer Lüfternabe angeordnete Düsen der Werkstoff in eine Kavität einer Spritzgussform zum Formen eines Lüfters injiziert. Der in die Spritzgussform injizierte Werkstoff füllt dabei die Kavität aus. Das Lüfterband wird jedoch zuletzt aufgefüllt, so dass jeweils im Bereich zwischen den Lüfterblättern zwei aufeinander treffende Fließfronten des Werkstoffes eine Bindenaht im Lüfterband bilden können.

Bindenähte stellen wegen der ungünstigen Orientierung der Makromoleküle senkrecht zu einer Fließrichtung im Bauteil bzw. einem Lüfter eine mechanische Schwachstelle dar. Diese Schwachstelle ist vor allem bei faserverstärkten Kunststoffen stärker ausgeprägt, da die Fasern nicht über die Bindenaht hinweg ragen.

Je nach Ausführung der Spritzgussform können im Bereich der Bindenaht Gaseinschlüsse entstehen, die die Festigkeit der Bindenaht zusätzlich schwächen. Durch die Reduzierung der Materialfestigkeit im Bereich der Bindenähte kann eine Verwendung von kostengünstigen Materialien als Werkstoff für schnell drehende Lüfter mit einem Lüfterband, wie beispielsweise Polypropylen oder Rezyklate mit Restverunreinigungen, aus mechanischen Gründen ausgeschlossen sein, da aufgrund der höchsten Rotationsgeschwindigkeit im Bereich des Lüfterbandes dieser Bereich mechanisch am stärksten belastet ist.

Die US 2005/238486 A1 offenbart ein Verfahren zur Beeinflussung des Materialflusses beim Spritzgießen von ringförmigen Lüftern. Gemäß der US 2005/238486 A1 erfolgt die Injektion des Werkstoffes über die Lüfternabe.

Die JP2008240565 und JP2008240566A ist auf ein Lüfterrad in einem Fahrzeug gerichtet. Sowohl die JP2008240565, als auch die JP2008240566A offenbart hierbei ein Verfahren, gemäß dem die im Bereich zwischen zwei benachbarten Lüfterblättern entstandene Bindenaht nachträglich modifiziert wird.

Die KR20150020783A offenbart einen Lüfter und eine Lüfterabdeckung einschließlich des Lüfters, durch die ein Verstärkungselement in das Bandteil eingefügt wird das die Enden der Lüfterblätter miteinander verbindet.

Die JPH07144340A bezieht sich auf ein Verfahren zum Spritzgießen eines Harzprodukts, insbesondere der Stoßstange eines Automobils. Die JPH07144340A offenbart dabei ein Spritzgießverfahren, das zum Spritzgießen eines dünnwandigen Harzprodukts in einem relativ großen Maßstab geeignet ist.

Die JPH0857904A bezieht sich auf ein Verfahren zur Herstellung eines spritzgegossenen Gegenstands und insbesondere auf ein Verfahren zur Herstellung eines dünnen, großformatigen spritzgegossenen Gegenstands, ohne Produktdefekte wie Schweißnähte und Einfallstellen zu verursachen.

Die DE202005021041U offenbart eine Vorrichtung zur Herstellung von Gegenständen, aus einem Zwei-Komponenten-Kunststoffmaterial mit besonderem Bezug zu Platten, hergestellt aus transparentem Kunststoffmaterial mit nicht-transparenten Bereichen, z. B. der Formung einer kontinuierlichen oder diskontinuierlichen peripheren Kante, wie zum Beispiel Fensterscheiben für den Automobilbereich und Bildschirmen von Plasma-Fernsehgeräten.

### Offenbarung der Erfindung

Die der Erfindung zugrunde liegende Aufgabe kann darin gesehen werden ein verbessertes Spritzgussverfahren zum Herstellen von preiswerten und robusten Lüftern vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Erfindungsgemäß wird ein Spritzgussverfahren zum Herstellen mindestens eines Lüfters mit einer Lüfternabe und mit einem über mindestens zwei Lüfterblätter mit der Lüfternabe verbundenen Lüfterband bereitgestellt. Bei dem Spritzgussverfahren weist eine Spritzgussform mindestens eine Kavität für eine Lüfternabe und mindestens eine Kavität für ein Lüfterband und mindestens zwei Kavitäten für mindestens zwei Lüfterblätter auf. Es wird ein zumindest einphasiger Werkstoff bereitgestellt und verflüssigt. Der zumindest einphasige Werkstoff wird über mindestens eine Düse in die Spritzgussform injiziert, wobei mindestens eine in einem Bereich der mindestens einen Kavität für das Lüfterband angeordnete Bindenaht im Bereich zwischen den Lüfterblättern vermieden oder beseitigt wird.

Die Kavitäten für die mindestens eine Lüfternabe, für die mindestens zwei Lüfterblätter und das mindestens eine Lüfterband bilden mindestens eine Spritzgussform für mindestens einen Lüfter und sind vorzugsweise miteinander werkstoffleitend verbunden. Hierdurch kann ein Werkstoff an einem beliebigen Punkt in die Spritzgussform eingespritzt werden und mindestens ein Lüfter gebildet werden. Durch das erfindungsgemäße Spritzgussverfahren kann kostengünstig und technisch einfach ein Lüfter mit einem umlaufenden Lüfterband hergestellt werden, bei dem das Lüfterband ohne eine Bindenaht im Bereich zwischen den Lüfterblättern ausgeführt ist. Das ist insbesondere deswegen möglich, da das zur mechanischen Stabilisierung verwendete Lüfterband ohne eine Bindenaht mechanisch besonders robust ausgeführt ist, sodass auch preiswerte und weniger feste Materialien zur Herstellung des Lüfters verwendet werden können. Die Bindenaht kann hierbei bereits bei dem Spritzgussverfahren vermieden werden oder nachträglich bzw. im Rahmen einer schrittweisen Einspritzung des Werkstoffes beseitigt werden. Dies kann beispielsweise durch eine zumindest einseitig gerichtete Strömungsumkehr und eine daraus resultierende Vermischung der Fließfronten des Werkstoffes realisiert werden. Der zumindest einphasige Werkstoff kann vorzugsweise ein Thermoplast sein. Alternativ können dem zumindest einphasigen Werkstoff als weitere Phasen Treibgase, wie beispielsweise Kohlendioxid oder Stickstoffe oder Füllstoffe, wie beispielsweise Mineralstoffe, (Hohl-)Glaskugeln, Glasfasern, Karbonfasern, mechanische oder chemische Zusätze und dergleichen, zugemischt werden. Der Werkstoff kann alternativ auch ein Duroplast oder ein Harz oder eine Mischung aus mehreren Kunststoffen sein.

Erfindungsgemäß wird der zumindest einphasige Werkstoff über mindestens eine in einem Bereich der mindestens einen Kavität des Lüfterbandes angeordnete Düse in die Spritzgussform injiziert. Ein im Bereich des Lüfterbandes in die Spritzgussform injizierter Werkstoff kann sich über die Kavität des Lüfterbandes in die weiteren Kavitäten der Spritzgussform ausbreiten. Hierdurch kann mindestens eine Bindenaht im Bereich der Lüfterblätter oder der Lüfternabe entstehen, da die resultierenden Fließfronten der Polymerschmelze bzw. des verflüssigten Werkstoffes erst außerhalb des Lüfterbandes aufeinander treffen können. Vorzugsweise entsteht mindestens eine Bindenaht möglichst nahe an der Lüfternabe. Hierdurch kann die Bindenaht in einem Bereich des Lüfters angeordnet sein, welcher bei einer Rotation geringeren mechanischen Belastungen ausgesetzt ist als das Lüfterband. Eine Lüfterfestigkeit kann dadurch verbessert und eine Berstdrehzahl des Lüfters erhöht werden.

Nach einem weiteren Ausführungsbeispiel des Verfahrens wird der zumindest einphasige Werkstoff über mindestens eine in einem Bereich der mindestens zwei Kavitäten der mindestens zwei Lüfterblätter angeordneten Düse in die Spritzgussform injiziert. Zusätzlich zu einer Einspritzung des zumindest einphasigen Werkstoffes in die Kavität der Lüfternabe kann der Werkstoff durch mindestens eine im Bereich mindestens eines Lüfterblattes angeordnete Düse in die Spritzgussform hineingeleitet werden. Dadurch kann die mindestens eine Bindenaht in einem Bereich der Lüfterblätter und damit in einem mechanisch weniger beanspruchten Bereich des Lüfters angeordnet sein.

Das Einspritzen des zumindest einphasigen Werkstoffs kann über die mindestens eine Düse im Bereich des Lüfterbandes und über die mindestens eine Düse im Bereich der Lüfterblätter gleichzeitig oder zeitversetzt erfolgen. Hierdurch kann eine radiale Position der mindestens einen Bindenaht auf mindestens einem Lüfterblatt gezielt eingestellt werden. Die Position kann alternativ auch über unterschiedliche Durchflussraten der jeweiligen Düsen im Bereich der Kavitäten des Lüfterbandes oder der Lüfterblätter einstellbar sein. Dies kann beispielsweise durch unterschiedliche Anguss- oder Anschnittquerschnitte oder durch unterschiedliche Temperierungen und der daraus resultierenden unterschiedlichen Viskositäten des zumindest einphasigen Werkstoffes realisiert werden.

Vorzugsweise kann mindestens eine Düse in einer Kavität für mindestens ein Lüfterband unmittelbar an einem Übergang zu der Kavität für das Lüfterband angeordnet sein. Durch eine oder mehrere derart positionierte Düsen kann eine Bindenaht im Bereich des Lüfterbandes vermieden werden.

Gemäß einer weiteren Ausführungsform des Verfahrens wird der zumindest einphasige Werkstoff über mindestens zwei Düsen sequenziell in die Spritzgussform injiziert. Hierdurch kann der Werkstoff über mehrere Düsen zeitlich versetzt in die Spritzgussform injiziert werden, so dass die resultierenden Fließfronten kontrolliert und eine Position mindestens einer Bindenaht gezielt eingestellt werden können.

Nach einer weiteren Ausführungsform des Verfahrens wird der zumindest einphasige Werkstoff über mindestens eine in einem Bereich der mindestens einen Kavität der Lüfternabe angeordnete Düse in die Spritzgussform injiziert. Bei einer Einspritzung des Werkstoffes im Bereich der Kavität für die Lüfternabe entsteht eine erste Strömung des Werkstoffes innerhalb der Spritzgussform.

Durch eine zusätzliche Einspritzung des Werkstoffes in die Kavität für die Lüfternabe kann eine zweite Strömung des Werkstoffes erzeugt werden, welche der ersten Strömung entgegengerichtet ist. Die erste und die zweite Strömung können abhängig von ihrer jeweiligen Durchflussrate, einer Geometrie des Lüfter, Anzahl und Position der Düsen und abhängig von einer Viskosität der jeweiligen Strömungen an unterschiedlichen Positionen aufeinander treffen und dadurch mindestens eine Bindenaht bilden. Hierdurch kann anhand einer Vielzahl an Paramatern die Position der Bindenaht eingestellt werden.

Gemäß einer weiteren Ausführungsform des Verfahrens wird ein Volumen der mindestens einen Kavität für das Lüfterband zumindest bereichsweise durch mindestens ein Einsetzelement reduziert und nach einem Ausbilden der mindestens einen Bindenaht das Volumen der mindestens einen Kavität für das Lüfterband durch Entfernen des mindestens einen Einsetzelementes freigegeben. Beispielsweise kann der zumindest einphasige Werkstoff in die Spritzgussform über die Kavität für die Lüfternabe und/oder über mindestens eine Kavität im Bereich der Lüfterblätter hineingeleitet werden. Für jede zu erwartende Bindenaht im Bereich des Lüfterbandes kann ein Einsatzelement in die Kavität positioniert werden, sodass ein Volumen der Kavität verringert wird. Das Einsetzelement kann beispielsweise ein beweglicher Werkzeugeinsatz, ein Werkzeugschieber oder ein Werkzeugstift sein. Wenn der zumindest einphasige Werkstoff in die Spritzgussform injiziert wird, können die Einsetzelemente entfernt werden und das Volumen erneut freigeben werden. Dies kann beispielsweise während eines Füllvorganges der Spritzgussform mit dem Werkstoff, während eines Nachdruckvorganges oder zwischen dem Füllvorgang und einem Nachdruckvorgang erfolgen. Zur Verbesserung der Bindenahtfestigkeit kann zumindest ein Volumen durch mindestens ein Einsetzelement zunächst reduziert oder teilgeschlossen werden. Erst nach einem Teil- oder Vollbefüllungsvorgang der Spritzgussform werden diese zusätzlichen Volumen freigegeben und der Lüfter wird vollständig ausgespritzt. Dies kann beispielsweise zeitgesteuert oder druckgesteuert werden. Hierdurch kann eine Strömung des Werkstoffes erzeugt werden. Durch die Strömung entsteht eine Teilüberdeckung der Fließfronten und somit eine Faserverstärkung der mindestens einen ursprüngliche Bindenahtposition, sodass eine Festigkeit der mindestens einen Bindenaht gesteigert werden kann.

Nach einer weiteren Ausführungsform des Verfahrens wird durch das mindestens eine Einsetzelement ein Volumen örtlich versetzt zu der mindestens einen Bindenaht reduziert oder freigegeben. Vorzugsweise ist das Volumen derart in der Kavität für das Lüfterband angeordnet, dass bei einem Freigeben des Volumens eine Strömung des Werkstoffes erzeugt werden und die mindestens eine Bindenaht eine Positionsänderung erfahren kann. Durch die Positionsänderung der mindestens einen Bindenaht kann die Bindenaht durch Reibungsprozesse, Scher- und Dehnströmungen sowie Verwirbelungen durchmischt werden. Hierdurch kann die Bindenaht in ihrer Bruchfestigkeit optimiert werden.

Gemäß einer weiteren Ausführungsform des Verfahrens wir nach dem Freigeben des Volumens der mindestens einen Kavität für das Lüfterband der zumindest einphasige Werkstoff über die mindestens eine Düse zum Auffüllen des mindestens einen Volumens bereitgestellt. Vorzugsweise kann nach dem Freigeben des mindestens einen Volumens durch das mindestens eine Einsetzelement durch mindestens eine Düse weiterer Werkstoff in die Spritzgussform injiziert werden. Dies kann beispielsweise im Rahmen eines Nachdruckvorganges durchgeführt werden. Durch das nachträgliche Injizieren des Werkstoffes kann die mindestens eine Bindenaht durch Verwirbelungen durchmischt und verstärkt werden.

Nach einer weiteren Ausführungsform des Verfahrens wird nach dem Freigeben des Volumens der mindestens einen Kavität für das Lüfterband der zumindest einphasige Werkstoff über mindestens eine zuvor aufgefüllte Nebenkavität zum Auffüllen des mindestens einen Volumens bereitgestellt. Das erfindungsgemäße Verfahren kann dadurch unterstützt werden, dass mindestens eine zusätzliche Kavität bzw. Nebenkavität je erwarteter Bindenaht an der Kavität für das Lüfterband angeschlossen ist. Diese Nebenkavität kann ebenfalls versetzt zu der zu erwartende Bindenaht angeordnet sein. Es ergibt sich somit eine geometrische Anordnung aus mindestens einer geöffneten Nebenkavität, mindestens einer klassisch zu erwartenden Bindenaht und mindestens einem durch ein Einsetzelement geschlossenem Volumen. Zur Verbesserung der Bindenahtfestigkeit wird die Kavität für das Lüfterband bis auf das mindestens eine geschlossene Volumen sowie die mindestens eine Kavität bzw. Nebenkavität zumindest teilweise mit dem Werkstoff gefüllt. Danach wird das mindestens eine Volumen durch Entfernen des mindestens einen Einsetzelementes freigegeben und zeitgleich oder zeitversetzt der Werkstoff aus der mindestens einen Kavität bzw. Nebenkavität zurück in die Kavität für das Lüfterband gepresst. Dadurch kann der Materialstrom des Werkstoffes durch die ursprüngliche Bindenaht erhöhen. Es kann eine verbesserte Überdeckung der Faserverstärkung über die Bindenaht und eine erhöhte Bindenahtfestigkeit realisiert werden.

Gemäß einer weiteren Ausführungsform des Verfahrens stellt die mindestens eine Nebenkavität den zumindest einphasigen Werkstoff örtlich versetzt zu der mindestens einen Bindenaht bereit. Hierdurch kann eine Strömung des Werkstoffes erzeugt werden, welche durch mindestens eine Bindenaht verläuft und die Bindenaht vermischt.

Im Folgenden werden anhand von stark vereinfachten schematischen Darstellungen bevorzugte Ausführungsbeispiele der Erfindung näher erläutert. Hierbei zeigen
- Fig. 1: schematische Darstellungen zur Veranschaulichung eines Spritzgussverfahrens mit Injizierung in eine Kavität für ein Lüfterband gemäß Ausführungsformen der Erfindung,
- Fig. 2: schematische Darstellungen zur Veranschaulichung eines Spritzgussverfahrens mit mehreren entlang einer Spritzgussform verteilten Injizierungen gemäß Ausführungsformen der Erfindung,
- Fig. 3: schematische Darstellungen zur Verdeutlichung eines Spritzgussverfahrens mit zeitlich verzögerten Injizierungen gemäß Ausführungsformen der Erfindung,
- Fig. 4: schematische Darstellungen zum Verdeutlichen eines Spritzgussverfahrens mit in einer Spritzgussform verwendeten Einsetzelementen gemäß einer Ausführungsform der Erfindung und
- Fig. 5: schematische Darstellungen zum Veranschaulichen eines Spritzgussverfahrens mit in einer Spritzgussform verwendeten Einsetzelementen und mit an die Spritzgussform angeschlossenen Nebenkavitäten gemäß einer Ausführungsform der Erfindung.

In den Figuren weisen dieselben konstruktiven Elemente jeweils dieselben Bezugsziffern auf.

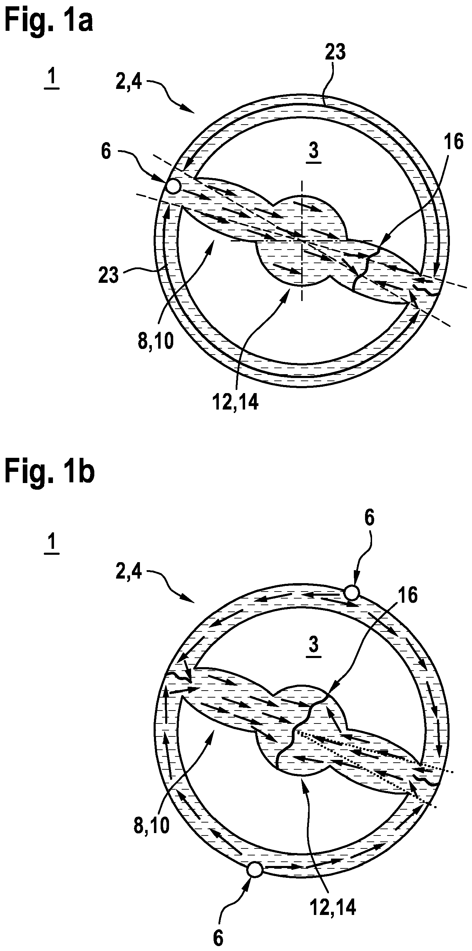

Figur 1a und 1b zeigen schematische Darstellungen eines Spritzgussverfahrens 1 mit einer Injizierung eines Werkstoffes in eine Kavität 2 für ein Lüfterband 4 gemäß Ausführungsformen der Erfindung. In Figur 1a wird über eine Düse 6 ein verflüssigter Werkstoff in die Spritzgussform 3 injiziert. Über die Kavität 2 für das Lüfterband 4 gelangt der Werkstoff in zwei Kavitäten 8 für die Lüfterblätter 10 und in die Kavität 12 für die Lüfternabe 14. Die Spritzgussform 3 besteht aus der Kavität 2 für das Lüfterband 4, die Kavität 12 für die Lüfternabe 14 und die zwei Kavitäten 8 für die Lüfterblätter 10. Die Pfeile verdeutlichen einen Materialfluss des Werkstoffes innerhalb der Spritzgussform 3. An Stellen, wo sich zwei Fließfronten des Werkstoffes treffen entstehen Bindenahten 16. Hierbei entsteht eine Bindenaht 16 im Bereich eines Lüfterblattes 10.

Bei der Figur 1b erfolgt eine Injizierung des Werkstoffes über zwei Düsen 6. Die Düsen 6 befinden sich hierbei im Bereich der Kavität 2 für das Lüfterband 4 auf zwei gegenüberliegenden Seiten der Kavität 2. Hierdurch entsteht eine Bindenaht 16 im Bereich der Lüfternabe 14.

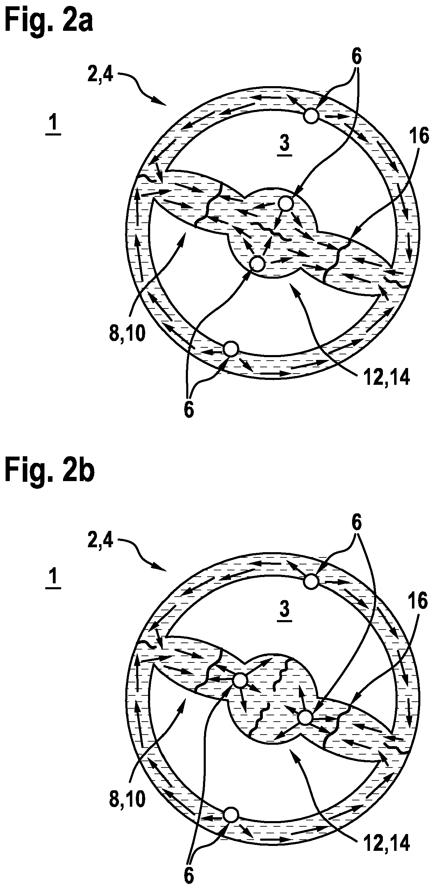

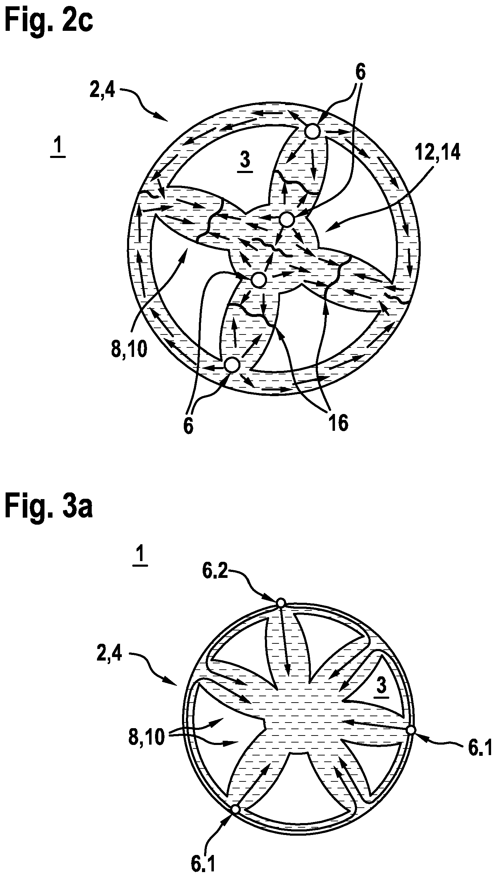

Figur 2 zeigt schematische Darstellungen eines Spritzgussverfahrens 1 mit mehreren entlang einer Spritzgussform 3 verteilten Düsen 6 zum Injizieren des Werkstoffes gemäß Ausführungsformen der Erfindung.

In der Figur 2a wird der Werkstoff über zwei Düsen 6 in die Kavität 2 für die Lüfternabe 4 und über zwei weitere Düsen 6 in die Kavität 12 für die Lüfternabe 14 hineingeleitet. Über die vier Düsen 6 wird die Spritzgussform 3 derart ausgefüllt, dass im Bereich der Lüfterblätter 10 jeweils eine Bindenaht 16 entsteht. Im Bereich der Lüfternabe 14 entsteht zwischen den beiden Düsen 6 ebenfalls eine Bindenaht 6.

Bei der Figur 2b ist ein Ausführungsbeispiel verdeutlicht, bei dem die Düsen 6 im Bereich der Kavität 12 für die Lüfternabe 14 derart angeordnet, dass die Düsen 6 in einem Übergangsbereich zu den Kavitäten 8 der Lüfterblätter 10 angeordnet sind.

In der Figur 2c sind zwei Düsen 6 in einem Übergangsbereich zwischen der Kavität 2 für die Lüfternabe 4 und den Kavitäten 8 für die Lüfterblätter 10 angeordnet. Zwei weitere Düsen 6 sind in einem Übergangsbereich zwischen der Kavität 2 für die Lüfternabe 4 und den Kavitäten 8 für die Lüfterblätter 10 angeordnet.

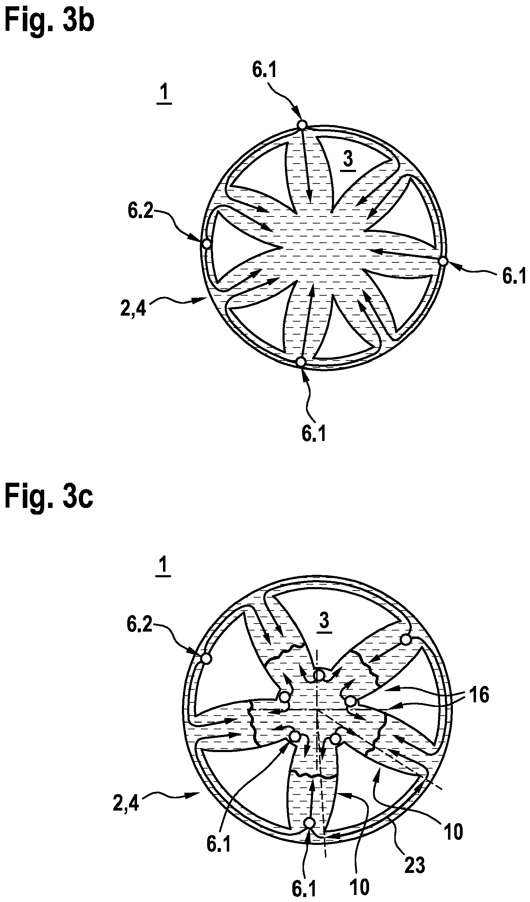

Die Figur 3 verdeutlicht anhand schematischer Darstellungen ein Spritzgussverfahrens 1 mit zeitlich verzögerten Injizierungen gemäß Ausführungsformen der Erfindung.

In den Figuren 3a und 3b sind drei Düsen 6 zum Injizieren eines Werkstoffes in die Kavität 2 für die Lüfternabe 4 angeordnet. Mindestens eine erste Düse 6.1 kann dabei zuerst einen Materialstrom des Werkstoffes bereitstellen. Nach einer definierten Zeitspanne kann mindestens eine zweite Düse 6.2 zum Injizieren des Werkstoffes verwendet werden. Hierdurch kann der zuerst erzeugte Materialstrom des Werkstoffes gezielt abgelenkt und eine Ausbildung einer Bindenaht 16 im Bereich der Lüfternabe 4 und der Lüfterblätter 8 unterbunden werden.

Die Figur 3c verdeutlicht ein Ausführungsbeispiel des Spritzgussverfahrens 1, bei dem durch eine zweite Düse 6.2 zeitlich verzögert der Werkstoff in die Kavität 2 der Lüfternabe 4 injiziert wird. Die zweite Düse 6.1 ist hierbei an einer Position angeordnet, an welcher eine Bindenaht 16 entstehen würde. Durch ein zeitlich verzögertes Einleiten eines Werkstoffes an der Position der Bindenaht 16 können die Fließfronten des Werkstoffes durchmischt und eine Bildung der Bindenaht 16 unterbunden werden.

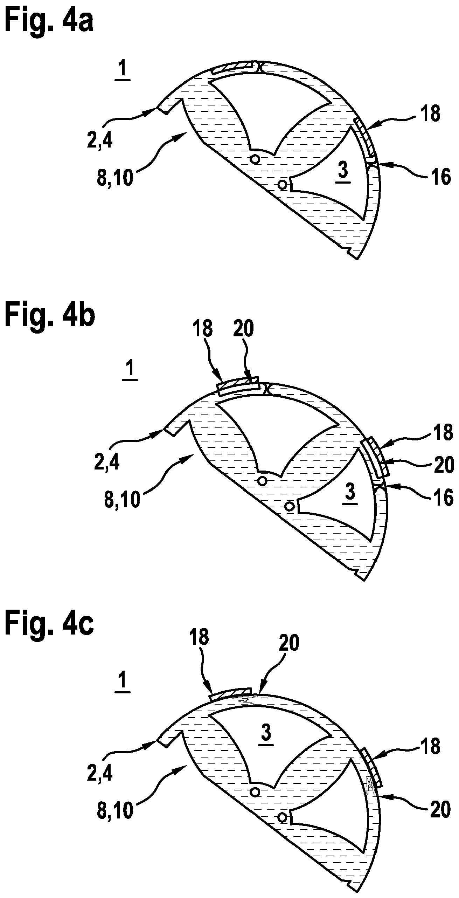

Figur 4 veranschaulicht anhand schematischer Darstellungen ein Spritzgussverfahren 1 mit in einer Spritzgussform 3 verwendeten Einsetzelementen 18 gemäß einer Ausführungsform der Erfindung.

Die Figur 4a zeigt einen ersten Schritt des Verfahrens 1, bei dem die Einsetzelemente 18 in der Kavität 2 des Lüfterbandes 4 eingesetzt sind.

Hierdurch werden mehrere Volumen 20 durch die Einsetzelemente 18 beansprucht, die durch den Werkstoff nicht ausgefüllt werden können.

In der Figur 4b wird ein weiterer Schritt des Verfahrens 1 dargestellt. Nach dem Befüllen der Spritzgussform 3 mit dem Werkstoff werden die Einsetzelemente 18 entfernt, wodurch mehrere Volumen 20 freigegeben werden.

Nach dem Freigeben der Volumen 20 in der Kavität 2 des Lüfterbandes 4 wird durch die Düsen 6 weiterer Werkstoff in die Spritzgussform 3 eingeleitet. Insbesondere im Bereich der bereits gebildeten Bindenahten 16 entsteht hierdurch ein Materialfluss, welcher die Bindenähte 16 vermischt und verstärkt.

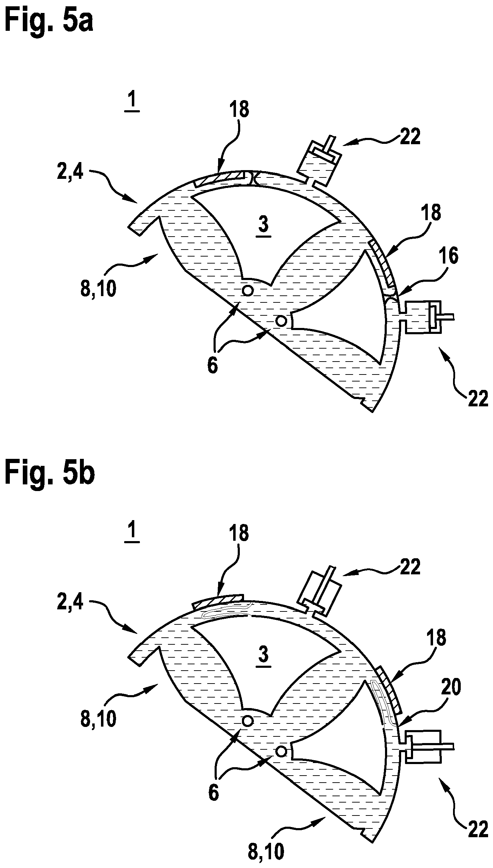

Die Figur 5 verdeutlicht durch schematische Darstellungen ein Spritzgussverfahren 1 mit in einer Spritzgussform 3 verwendeten Einsetzelementen 18 und mit an die Spritzgussform 3 angeschlossenen Nebenkavitäten 22 gemäß einer Ausführungsform der Erfindung. Im Unterschied zu den Figuren 4a bis 4c werden bei einem Befüllen der Spritzgussform 3 mit dem Werkstoff Nebenkavitäten 22 zumindest teilweise befüllt. Die Nebenkavitäten 22 sind direkt mit der Kavität 2 des Lüfterbandes 4 verbunden und sind versetzt zu den theoretisch vermuteten Bindenähte 16 angeordnet.

In der Figur 5b werden die Volumen 20 durch die Einsetzelemente 18 nach einem Befüllen der Spritzgussform 3 freigegeben. Anschließend wird der in die Nebenkavitäten 22 eingeleitete Werkstoff aus den Nebenkavitäten 22 hinaus in die Kavität 2 des Lüfterbandes 4 gepresst. Hierdurch entsteht ein Materialfluss aus der jeweiligen Nebenkavität über die jeweilige Bindenaht 16 in das jeweilige freigegebene Volumen 20. Die jeweilige Bindenaht 16 kann hierdurch effektiv durchmischt und entfernt werden.

Durch die verdeutlichten Ausführungsformen des Spritzgussverfahrens 1 kann eine Bindenaht im Bereich eines mechanische stark beanspruchten Lüfterbandes 4 vermieden oder beseitigt werden und somit eine Bruchfestigkeit des Lüfters erhöht werden. Hierdurch können mechanisch verbesserte Lüfter hergestellt werden oder weniger hochwertige Werkstoffe zum Herstellen des Lüfters bei gleichbleibender Bruchfestigkeit verwendet werden.

## Patentansprüche

1. Spritzgussverfahren (1) zum Herstellen mindestens eines Lüfters mit einer Lüfternabe (4) und mit einem über mindestens zwei Lüfterblätter (10) mit der Lüfternabe (14) verbundenen Lüfterband (4), wobei
- Eine Spritzgussform (3) mit mindestens einer Kavität (12) für eine Lüfternabe (14), mit mindestens einer Kavität (2) für ein Lüfterband (4) und mit mindestens zwei Kavitäten (8) für mindestens zwei Lüfterblätter (10) bereitgestellt wird,
- Ein zumindest einphasiger Werkstoff bereitgestellt wird,
- Der zumindest einphasige Werkstoff verflüssigt wird und
- Der zumindest einphasige Werkstoff über mindestens eine Düse (6) in die Spritzgussform (3) injiziert wird, wobei mindestens eine in einem Bereich der mindestens einen Kavität (2) für das Lüfterband (4) angeordnete Bindenaht (16) im Bereich (23) zwischen angrenzenden Lüfterblättern (10) vermieden wird, wobei der zumindest einphasige Werkstoff über mindestens eine in einem Bereich der mindestens einen Kavität (2) des Lüfterbandes (4) angeordnete Düse (6) in die Spritzgussform (3) injiziert wird, sodass mindestens eine Bindenaht im Bereich der Lüfterblätter oder der Lüfternabe entsteht.

2. Spritzgussverfahren nach Anspruch 1 oder 2, wobei der zumindest einphasige Werkstoff über mindestens eine in einem Bereich der mindestens zwei Kavitäten (8) der mindestens zwei Lüfterblätter (10) angeordnete Düse (6) in die Spritzgussform (3) injiziert wird.

3. Spritzgussverfahren nach einem der Ansprüche 1 bis 3, wobei der zumindest einphasige Werkstoff über mindestens zwei Düsen (6) sequenziell in die Spritzgussform (3) injiziert wird.

4. Spritzgussverfahren nach einem der Ansprüche 1 bis 4, wobei der zumindest einphasige Werkstoff über mindestens eine in einem Bereich der mindestens einen Kavität (12) der Lüfternabe (14) angeordnete Düse (6) in die Spritzgussform (3) injiziert wird.

5. Spritzgussverfahren nach Anspruch 5, wobei ein Volumen (20) der mindestens einen Kavität (2) für das Lüfterband (4) zumindest bereichsweise durch mindestens ein Einsetzelement (18) reduziert wird und nach einem Ausbilden der mindestens einen Bindenaht (16) das Volumen (20) der mindestens einen Kavität (2) für das Lüfterband (4) durch Entfernen des mindestens einen Einsetzelementes (18) freigegeben wird.

6. Spritzgussverfahren nach Anspruch 5 oder 6, wobei durch das mindestens eine Einsetzelement (18) ein Volumen (20) örtlich versetzt zu der mindestens einen Bindenaht (16) reduziert oder freigegeben wird.

7. Spritzgussverfahren nach Anspruch 6 oder 7, wobei nach dem Freigeben des Volumens (20) der mindestens einen Kavität (2) für das Lüfterband (4) der zumindest einphasige Werkstoff über die mindestens eine Düse (6) zum Auffüllen des mindestens einen Volumens (20) bereitgestellt wird.

8. Spritzgussverfahren nach Anspruch 6 oder 7, wobei nach dem Freigeben des Volumens (20) der mindestens einen Kavität (2) für das Lüfterband (4) der zumindest einphasige Werkstoff über mindestens eine zuvor aufgefüllte Nebenkavität (22) zum Auffüllen des mindestens einen Volumens (20) bereitgestellt wird.

9. Spritzgussverfahren nach Anspruch 9, wobei die mindestens eine Nebenkavität (20) örtlich zu der mindestens einen Bindenaht (16) versetzt den zumindest einphasigen Werkstoff bereitstellt.

## Claims

1. Injection-moulding method (1) for producing at least one fan having a fan hub (4) and having a fan belt (4) which is connected to the fan hub (14) by way of at least two fan blades (10), wherein
- an injection mould (3) having at least one cavity (12) for a fan hub (14), having at least one cavity (2) for a fan belt (4) and having at least two cavities (8) for at least two fan blades (10) is provided,
- an at least one-phase material is provided,
- the at least one-phase material is liquefied and
- the at least one-phase material is injected into the injection mould (3) by way of at least one nozzle (6), wherein at least one weld line (16) arranged in a region of the at least one cavity (2) for the fan belt (4) is avoided in the region (23) between adjoining fan blades (10), wherein the at least one-phase material is injected into the injection mould (3) by way of at least one nozzle (6) arranged in a region of the at least one cavity (2) for the fan belt (4), such that at least one weld line is produced in the region of the fan blades or of the fan hub.

2. Injection-moulding method according to Claim 1 or 2, wherein the at least one-phase material is injected into the injection mould (3) by way of at least one nozzle (6) arranged in a region of the at least two cavities (8) for the at least two fan blades (10).

3. Injection-moulding method according to one of Claims 1 to 3, wherein the at least one-phase material is injected into the injection mould (3) sequentially by way of at least two nozzles (6).

4. Injection-moulding method according to one of Claims 1 to 4, wherein the at least one-phase material is injected into the injection mould (3) by way of at least one nozzle (6) arranged in a region of the at least one cavity (12) for the fan hub (14).

5. Injection-moulding method according to Claim 5, wherein a volume (20) of the at least one cavity (2) for the fan belt (4) is reduced at least in certain regions by at least one insert element (18), and, after the at least one weld line (16) has been formed, the volume (20) of the at least one cavity (2) for the fan belt (4) is freed up by removal of the at least one insert element (18).

6. Injection-moulding method according to Claim 5 or 6, wherein a volume (20) is reduced or freed up in a positionally offset manner with respect to the at least one weld seam (16) by way of the at least one insert element (18).

7. Injection-moulding method according to Claim 6 or 7, wherein, after the volume (20) of the at least one cavity (2) for the fan belt (4) has been freed up, the at least one-phase material is provided by way of the at least one nozzle (6) for the purpose of filling the at least one volume (20).

8. Injection-moulding method according to Claim 6 or 7, wherein, after the volume (20) of the at least one cavity (2) for the fan belt (4) has been freed up, the at least one-phase material is provided by way of at least one previously filled auxiliary cavity (22) for the purpose of filling the at least one volume (20).

9. Injection-moulding method according to Claim 9, wherein the at least one auxiliary cavity (20) provides the at least one-phase material in a positionally offset manner with respect to the at least one weld line (16).

## Revendications

1. Procédé de moulage par injection (1) pour la fabrication d'au moins un ventilateur doté d'un moyeu de ventilateur (4) et d'une courroie de ventilateur (4) reliée au moyeu de ventilateur (14) au travers d'au moins deux pales de ventilateur (10), dans lequel :
- un moule de moulage par injection (3) avec au moins une cavité (12) est mise à disposition pour un moyeu de ventilateur (14), avec au moins une cavité (2) prévue pour une courroie de ventilateur (4) et avec au moins deux cavités (8) prévues pour au moins deux pales de ventilateur (10) ;
- un matériau au moins monophasé est mis à disposition ;
- le matériau au moins monophasé est fluidifié ;
- le matériau au moins monophasé est injecté via au moins une buse (6) dans le moule de moulage par injection (3), dans lequel au moins une ligne de jointement (16) disposée dans une région de l'au moins une cavité (2) prévue pour la courroie de ventilateur (4) est évitée dans la région (23) située entre les pales de ventilateur (10) connexes, dans lequel le matériau au moins monophasé est injecté dans le moule de moulage par injection (3) au travers d'au moins une buse (6) disposée dans une région de l'au moins une cavité (2) de la courroie de ventilateur (4), de sorte qu'au moins une ligne de jointement se produise dans la région des pales de ventilateur ou du moyeu de ventilateur.

2. Procédé de moulage par injection selon la revendication 1 ou 2, dans lequel le matériau au moins monophasé est injecté dans le moule de moulage par injection (3) au travers d'au moins une buse (6) disposée dans une région des au moins deux cavités (8) des au moins deux pales de ventilateur (10).

3. Procédé de moulage par injection selon l'une quelconque des revendications 1 à 3, dans lequel le matériau au moins monophasé est injecté séquentiellement dans le moule de moulage par injection (3) au travers d'au moins deux buses (6).

4. Procédé de moulage par injection selon l'une quelconque des revendications 1 à 4, dans lequel le matériau au moins monophasé est injecté dans le moule de moulage par injection (3) au travers d'au moins une buse (6) disposée dans une région de l'au moins une cavité (12) du moyeu de ventilateur (14).

5. Procédé de moulage par injection selon la revendication 5, dans lequel un volume (20) de l'au moins une cavité (2) prévue pour la courroie de ventilateur (4) est réduit au moins en partie par au moins un élément inséré (18) et qu'après la formation de l'au moins une ligne de jointement (16), le volume (20) de l'au moins une cavité (2) prévue pour la courroie de ventilateur (4) est libéré par retrait de l'au moins un élément inséré (18) .

6. Procédé de moulage par injection selon la revendication 5 ou 6, dans lequel un volume (20) est réduit ou libéré localement de façon décalée par rapport à l'au moins une ligne de jointement (16) au travers de l'au moins un élément inséré (18).

7. Procédé de moulage par injection selon la revendication 6 ou 7, dans lequel après la libération du volume (20) de l'au moins une cavité (2) prévue pour la courroie de ventilateur (4), le matériau au moins monophasé est mis à disposition au travers de l'au moins une buse (6) pour remplir l'au moins un volume (20).

8. Procédé de moulage par injection selon la revendication 6 ou 7, dans lequel après la libération du volume (20) de l'au moins une cavité (2) prévue pour la courroie de ventilateur (4), le matériau au moins monophasé est mis à disposition au travers d'au moins une cavité secondaire (22) précédemment remplie afin de remplir l'au moins un volume (20).

9. Procédé de moulage par injection selon la revendication 9, dans lequel l'au moins une cavité secondaire (20) est mise à disposition à proximité de l'au moins une ligne de jointement (16) de façon décalée par rapport à l'au moins un matériau monophasé.
